# EUROPEAN PATENT APPLICATION

(11) **EP 4 144 997 A1**
(43) Date of publication of application: **08.03.2023**
(21) Application number: 22193201.5
(22) Date of filing: 31.08.2022
(51) Int. Cl.: F04D 25/10, F04D 29/40, F04D 29/46, F04D 29/56, F04F 5/16, F04D 25/08, F24F 13/12

(54) **BLOWER**

(30) Priority: 03.09.2021 KR 20210117647
(71) Applicant: LG Electronics Inc., Seoul 07336 (KR)
(72) Inventor: Lee, Kunyong, 08592 Seoul (KR); Park, Keunman, 08592 Seoul (KR); Kim, Bohyun, 08592 Seoul (KR); Ku, Myungjin, 08592 Seoul (KR)
(74) Representative: Vossius & Partner Patentanwälte Rechtsanwälte mbB

(57) **Abstract**

The present disclosure relates to a blower. According to the present disclosure, the blower includes; a lower case provided with an inlet; a first tower that extends upward from the lower case and is formed with a first outlet; a second tower that extends upward from the lower case and is provided with a second outlet; a fan that is rotatably disposed on the lower case; a first air flow converter that is disposed inside the first tower or protrudes outward of the first tower; and a second air flow converter that is disposed inside the second tower or protrudes outward of the second tower, in which each of the first air flow converter and the second air flow converter includes: a guide board that is disposed inside the first tower or the second tower or protrudes through a first wall or a second wall; an upper gear that rotates in engage with an upper portion of the guide board; a lower gear that rotates in engage with a lower portion of the guide board; a shaft that is connected to each of the upper gear and the lower gear to rotate together; and a motor that is connected to one of the upper gear and the lower gear to provide a driving force.

## Description

The present disclosure relates to a blower. More particularly, the present disclosure relates to a blower capable of controlling the blowing direction.

A blower may cause an air flow to circulate air in an indoor space or to form an air flow toward a user. Recently, a lot of researches have been made on an air discharging structure of a blower that may give a user a feeling of comfort.

The blower may directly blow air to a user, but in some cases, it is possible to provide user's comfort through indirect air blowing.

In this regard, Korean Patent Laid-Open Patent Publication Nos. KR2011-0099318, KR2011-0100274, KR2019-0015325, and KR2019-0025443 disclose a blower or a fan that blows air using the Coanda effect.

The blower disclosed in the above documents discloses a function of providing direct blowing to a user, so there is a problem in that it may not provide indirect blowing.

In addition, the conventional blower discloses the contents of adjusting a blowing direction by changing the disposition of the entire structure in order to control the blowing direction. The structure for controlling the wind direction by changing the disposition of the entire structure has problems such as difficulty in effectively and stepwise controlling the blowing direction, or excessive power consumption.

The present disclosure is directed to a blower capable of implementing direct wind and indirect wind.

Another object of the present disclosure is directed to a blower capable of changing a disposition of a guide board for controlling a wind direction of the blower with a simple driving device.

Aspects of the present disclosure are not limited to the above-mentioned aspects. That is, other aspects that are not described may be obviously understood by those skilled in the art from the following specification.

The invention is specified by the independent claim. Preferred embodiments are defined in the dependent claims. According to the present disclosure, a blower may include: a lower case that has an inlet provided therearound and has an opened upper side; a first tower that extends upward from the lower case and has a first outlet opened forward on a first wall; a second tower that extends upward from the lower case, is spaced apart from the first wall, and has a second outlet opened forward on a second wall facing the first wall; a fan that is disposed in the lower case and makes air introduced from the inlet flow to an upper side in which the first tower and the second tower are disposed, thereby making air flowing upward by the fan flow into the space between the first tower and the second tower. In addition, the blower may include a first air flow converter that is disposed in front of the first outlet, disposed inside the first tower, or protrudes from the first wall in a direction in which the second tower is disposed; and a second air flow converter that is disposed in front of the first outlet, disposed inside the second tower, or protrudes from the second wall in a direction in which the first tower is disposed, thereby changing the wind direction of the air flowing forward through between the first and second towers.

Each of the first air flow converter and the second air flow converter includes: a guide board that is disposed inside the first tower or the second tower or protrudes through a first wall or a second wall; an upper gear that rotates in engage with an upper portion of the guide board; a lower gear that rotates in engage with a lower portion of the guide board; a shaft that is connected to each of the upper gear and the lower gear to rotate together; and a motor that is connected to one of the upper gear and the lower gear to provide a driving force, so, even if the guide board has a structure formed long in an up-down direction, it is possible to change the disposition with only one driving motor.

The air flow converter may include: an upper guider that is fixedly disposed above the guide board and engages with the upper gear to move the disposition of the guide board; and a lower guider that is fixedly disposed below the guide board and engages with the lower gear to move the disposition of the guide board, thereby changing the disposition of the guide board according to the operation of the drive motor.

The air flow converter may include: an upper support that is fixedly disposed inside the first tower or the second tower and limits a movement range of the upper guider; and a lower support that is fixedly disposed inside the first tower or the second tower and limits a movement range of the lower guider, thereby guiding the movement of the guide board.

An upper shaft groove into which an upper end of the shaft is inserted may be formed in the upper support, a lower shaft groove into which a lower end of the shaft is inserted may be formed in the lower support, and the shaft may be rotatably disposed in each of the upper shaft groove and the lower shaft groove, so the shaft may stably rotate in the fixed state.

The upper guider may include an upper board mounter that is fixed to one side of the guide board, an upper board gear that engages with the upper gear to change the disposition of the upper guider, and an upper guide rib that is connected to the upper support to guide the movement of the upper guide, and an upper guide groove limiting the movement range of the upper guide rib may be formed in the upper support, so the upper guide may be mounted on the guide board to move the guide board.

A pair of the upper board mounter may be spaced apart in the vertical direction, and the upper gear may be disposed between the pair of upper board mounters spaced apart in an up-down direction, thereby moving the guide board in a state in which the upper guider is stably mounted on the guide board.

The upper support may include an upper fixing body that is mounted inside the first tower or the second tower, and an upper fastening body that is coupled to the upper fixing body and mounted with the driving motor, and an upper guide groove guiding the movement of the upper guide rib may be formed in the upper fixing body, so the upper guide groove forms a groove in the upward direction.

The lower guider may include a lower board mounter that is fixed to the guide board at a position spaced downward from the upper guider, a lower board gear that engages with the lower gear to change the disposition of the lower guider, and a lower guide rib that is connected to the lower support to guide the movement of the lower guider, and a lower guide groove limiting the movement range of the lower guide rib may be formed in the lower support, so the lower guider is mounted on the guide board to move the guide board.

The upper guide rib and the lower guide rib may extend in different directions, and each of the upper guide groove and the lower guide groove may form a groove in a direction in which the upper guide rib and the lower guide rib extend, thereby limiting the movement of the up-down direction of the guide board.

The upper guide rib may include an upper horizontal rib that protrudes from one side of the upper board mounter in a direction in which the upper support is disposed, and an upper vertical rib that protrudes upward from an end portion of the upper horizontal rib, the lower guide rib may include a lower horizontal rib that protrudes from a lower end portion of the lower board mounter in a direction in which the lower support is disposed, and a lower vertical rib that protrudes from the end portion of the lower horizontal rib in the up-down direction, and the upper horizontal rib may extend in a direction away from the guide board, and the lower horizontal rib may extend in a direction closer to the guide board, thereby stably moving the guide board.

The lower support may include a lower fixing body mounted on the inside of the first tower or the second tower, and the lower fixing body may include a lower support plate that supports the lower horizontal rib, thereby preventing the load of the guide board from concentrating on the lower vertical rib.

The lower fixing body may include a guide wall that prevents the lower guide rib from moving in a direction perpendicular to a moving direction, thereby preventing the guide board from vibrating or moving in the direction perpendicular to the moving direction.

A first board slit through which the guide board of the first air flow converter passes may be formed on the first wall of the first tower, a second board slit through which the guide board of the second air flow converter passes may be formed on the second wall of the second tower, when the guide board of the first air flow converter is disposed inside the first tower, the end portion of the guide board of the first air flow converter may be disposed in the first board slit, and when the guide board of the first air flow converter is disposed inside the first tower, the end portion of the guide board of the first air flow converter may be disposed in the first board slit, thereby preventing the wind direction of the air flowing forward along the first wall and the second wall from being changed by the first board slit or the second board slit.

A first board slit through which the guide board of the first air flow converter passes forward of the first outlet may be disposed on the first wall, a second board slit through which the guide board of the second air flow converter passes forward of the second outlet may be disposed on the second wall, and when the guide board of each of the first air flow guider and the second air flow guider protrudes from the first tower or the second tower, a wind direction of air flowing forward through the first outlet or the second outlet may be changed.

Detailed contents of other exemplary embodiments are described in a detailed description and are illustrated in the accompanying drawings.

According to an embodiment disclosed in the present disclosure, there is one or more of the following effects:

First, it is possible to provide a direct wind and an indirect wind to a user by including a guide board for controlling a wind direction of air discharged forward through a first outlet and a second outlet.

Second, the guide board is connected to a top and a bottom of the shaft, and has one driving motor, so the disposition of the guide board may be changed. As a result, it is possible to stably change the disposition of the guide board by using a single motor, even if the simple guide board has a structure in which the guide board is vertically long.

The effects of the present disclosure are not limited to the above-described effects. That is, other effects that are not described may be obviously understood by those skilled in the art from the claims.

### Description of Drawings

FIG. 1 is a perspective view of a blower according to a first embodiment of the present disclosure.
FIG. 2A is an exemplary operation diagram when air is discharged in a first direction from the blower of FIG. 1.
FIG. 2B is an exemplary operation diagram when the air is discharged in a second direction from the blower of FIG. 1.
FIG. 3 is a front view of FIG. 1.
FIG. 4 is a plan view of FIG. 1.
FIG. 5 is a cross-sectional view taken along line V-V of FIG. 3.
FIG. 6 is a cross-sectional view taken along line VI-VI of FIG. 4.
FIG. 7 is a partial exploded perspective view illustrating an inside of a second tower of FIG. 1.
FIG. 8 is a right side view of FIG. 7.
FIG. 9 is a cross-sectional view taken along line IX-IX of FIG. 3.
FIG. 10 is a cross-sectional view taken along line IX-IX of FIG. 3.
FIG. 11 is a cross-sectional view taken along line XI-XI of FIG. 3.
FIG. 12 is a view for describing an air flow converter disposed inside the first tower according to an embodiment of the present disclosure.
FIG. 13 is an exploded perspective view of the air flow converter according to the embodiment of the present disclosure.
FIG. 14 is a diagram for describing a disposition and connection relationship of an upper portion of a guide board, an upper guide, and an upper support according to an embodiment of the present disclosure.
FIG. 15 view for describing an upper guider disposed above a guide according to an embodiment of the present invention.
FIG. 16 is an perspective view of the upper guider, the upper supporter, and the driving motor according to an embodiment of the present invention.
FIG. 17 is a bottom perspective view of the upper support of FIG. 16 according to an embodiment of the present invention.
FIG. 18 is a diagram for describing a disposition and connection relationship of a lower portion of the guide board, a lower guide, and a lower support according to an embodiment of the present invention.
FIG. 19 is a diagram for describing a lower guider disposed below the guide according to the embodiment of the present invention.
FIG. 20 is an exploded perspective view of the lower guider and the lower support according to the embodiment of the present invention.
FIG. 21 is a plan view of the lower support according to the embodiment of the present invention.

Various advantages and features of the present disclosure and methods accomplishing them will become apparent from the following description of embodiments with reference to the accompanying drawings. However, the present disclosure is not limited to the embodiments disclosed herein, but will be implemented in various forms. The embodiments make contents of the present disclosure thorough and are provided so that those skilled in the art can easily understand the scope of the present disclosure. Therefore, the present disclosure will be defined by the scope of the appended claims. Throughout the specification, like reference numerals denote like elements.

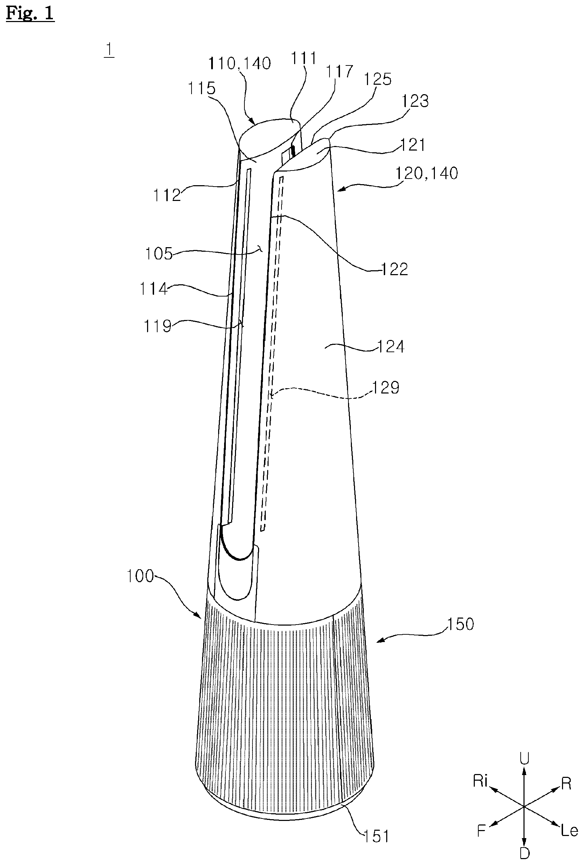

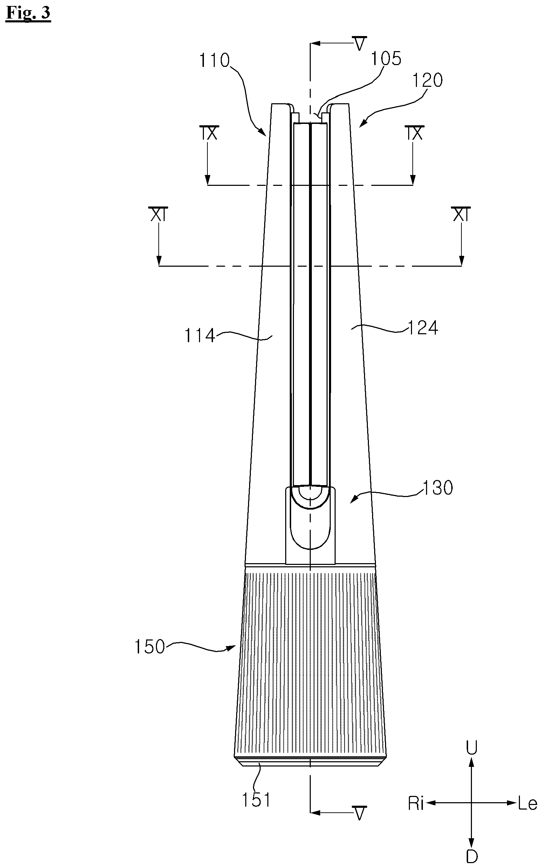

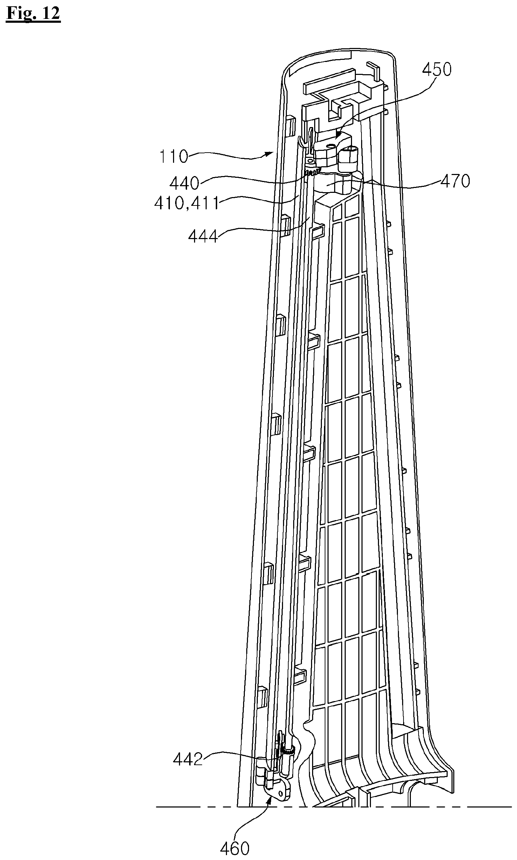

Direction indications of up (U), down (D), left (Le), right (Ri), before (F), and after (R) indicated in FIGS. 1 to 12 are for convenience of description of the present disclosure, and does not limit the scope of the present disclosure. Accordingly, when the reference is changed, the directions may be set differently.

Hereinafter, the present disclosure will be described with reference to drawings for describing a blower according to embodiments of the present disclosure.

### <Overall Configuration>

Referring to FIGS. 1 to 4, a blower 1 includes a case 100 that provides an appearance. The case 100 includes a lower case 150 in which a filter 200 is installed, and an upper case 140 that discharges air through a Coanda effect.

The upper case 140 includes a first tower 110 and a second tower 120 that are separated in the form of two pillars. The first tower 110 is disposed on the left, and the second tower 120 is disposed on the right.

The first tower 110 and the second tower 120 are disposed to be spaced apart from each other. A blowing space 105 is formed between the first tower 110 and the second tower 120. The blowing space 105 is opened at the front, rear and upper side.

The upper case 140 including the first tower, the second tower, and the blowing space is formed in a truncated cone shape.

Outlets 117 and 127 disposed in the first tower 110 and the second tower 120, respectively, discharge air to the blowing space 105. The first outlet 117 is formed in the first tower 110, and the second outlet 127 is formed in the second tower 120.

Each of the first outlet and the second outlet is formed in each of the first tower 110 and the second tower 120 at a position where the blowing space is formed. The air discharged through the first outlet 117 or the second outlet 127 may be discharged in a direction crossing the blowing space 105.

An air discharging direction of the air discharged through the first tower 110 and the second tower 120 may be formed in a front-rear direction and an up-down direction.

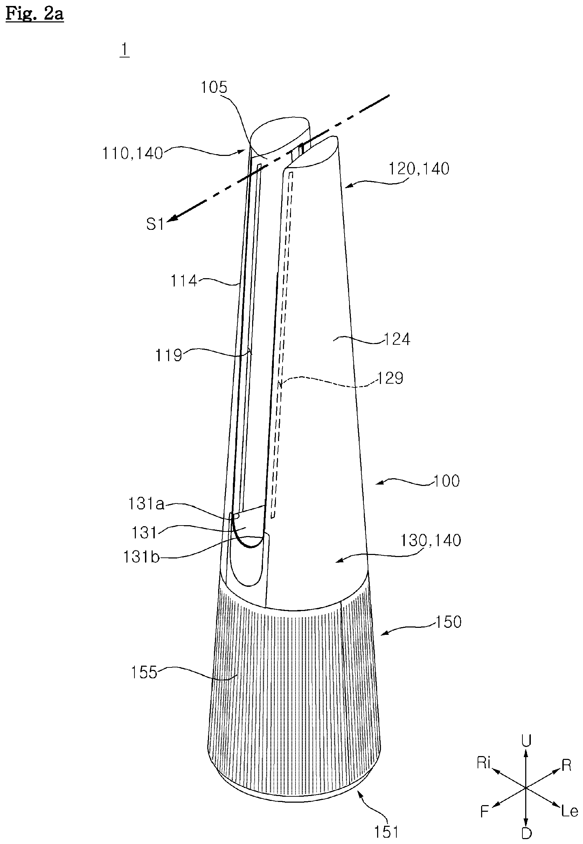

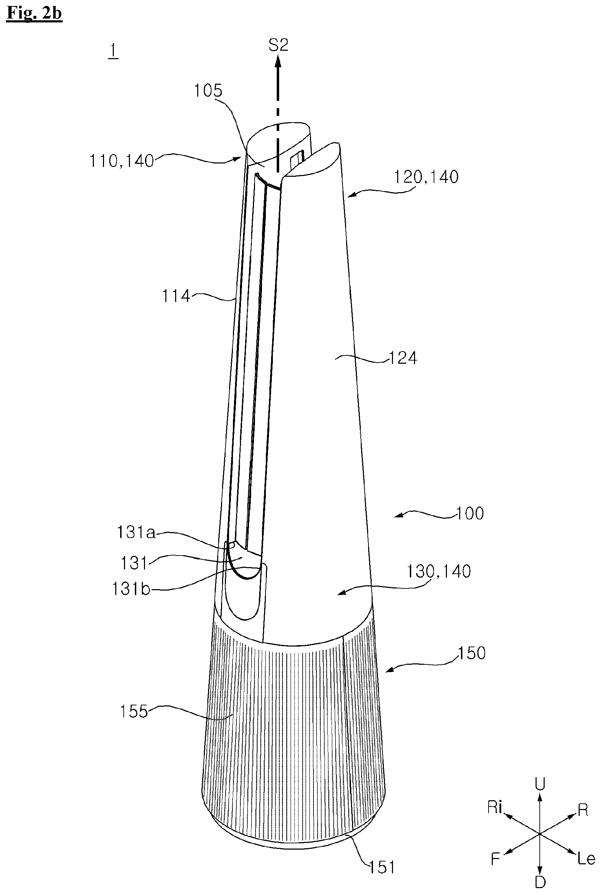

Referring to FIG. 2A, the air discharging direction crossing the blowing space 105 may be formed as a first air discharging direction S1 disposed in the horizontal direction. In addition, referring to FIG. 2B, the air discharging direction crossing the blowing space 105 may be formed as a second air discharging direction S2 formed in the up-down direction.

The air flowing in the first air discharging direction S1 may be defined as a horizontal air flow, and the air flowing in the second air discharging direction S2 may be defined as an upward air flow.

The horizontal air flow may mean that a main flow direction of air is in the horizontal direction, and may mean that a flow rate of the air flowing in the horizontal direction is formed more. Similarly, the upward air flow may mean that the main flow direction of air is the upward direction, and mean that the flow rate of the air flowing in the upward direction is formed more.

The blowing space 105 is formed by the first tower 110 and the second tower 120. The blowing space 105 may be formed as a space between surfaces facing each of the first tower 110 and the second tower 120.

The air discharged from the first outlet 117 of the first tower 110 and the air discharged from the second outlet 127 of the second tower 120 are joined in the blowing space 105, and then, flows forward or upward.

Indirect air flow is also generated even in the outer walls 114 and 124 due to the formation of a horizontal air flow caused by the Coanda effect generated in the blowing space 105. Referring to FIG. 2A, the air behind the blowing space may also flow into the blowing space by the discharge air discharged to the blowing space 105.

Since the discharge air of the first outlet 117 and the discharge air of the second outlet 127 are joined in the blowing space 105, the straightness of the discharge air may be improved. In addition, by joining the discharge air of the first outlet 117 and the discharge air of the second outlet 127 in the blowing space 105, the air around the first tower 110 and the second tower 120 may indirectly flow in the air discharge direction.

Referring to FIG. 2A, the first air discharging direction S1 is formed from the rear to the front, and referring to FIG. 2B, the second air discharging direction S2 is formed from the lower side to the upper side.

Referring to FIG. 1, an upper side end 111 of the first tower 110 and an upper side end 121 of the second tower 120 are spaced apart from each other for the second air discharging direction S2. That is, the air discharged in the second air discharging direction S2 does not interfere with the case 100 of the blower 1.

Referring to FIG. 1, for the first air discharging direction S1, the front end 112 of the first tower 110 and the front end 122 of the second tower 120 are spaced apart from each other, and a rear end 113 of the first tower 110 and a rear end 123 of the second tower 120 are also spaced apart from each other.

A surface facing the blowing space 105 in the first tower 110 and the second tower 120 is referred to as an inner side surface, and a surface not facing the blowing space 105 is referred to as an outer side surface.

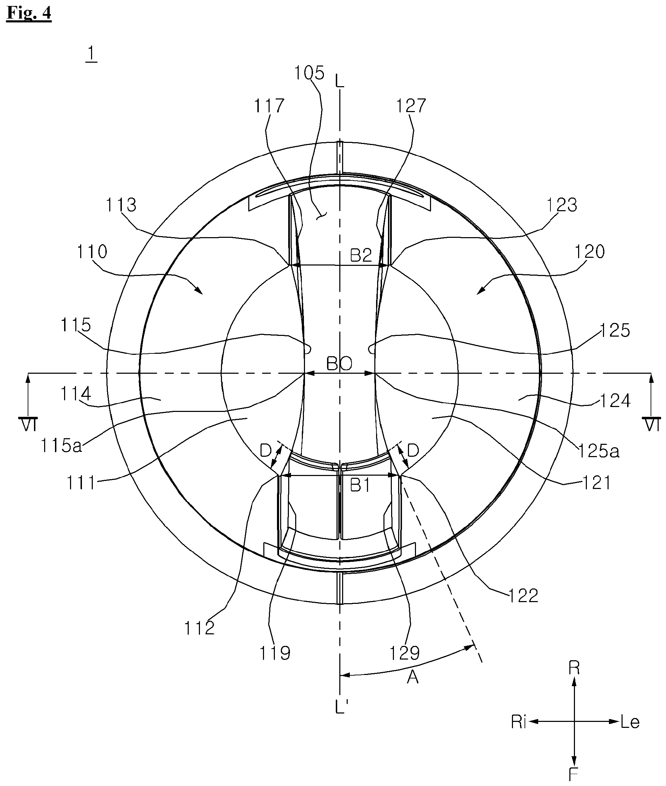

Referring to FIG. 4, an outer side wall 114 of the first tower 110 and an outer side wall 124 of the second tower 120 are disposed in an opposite direction to each other. An inner side wall (or first wall, 115) of the first tower 110 and an inner side wall (or second wall, 125) of the second tower 120 are disposed to face each other.

The first inner side wall 115 is formed to protrude toward the second tower, and the second inner side wall 125 is formed to protrude toward the first tower.

The first tower 110 and the second tower 120 are formed in a streamlined shape with respect to the flow direction of the air.

The first inner side wall 115 and the first outer side wall 114 are formed in a streamlined shape with respect to the front-rear direction, and the second inner side wall 125 and the second outer side wall 124 are formed in a streamlined shape with respect to the front-rear direction.

Referring to FIG. 4, the first outlet 117 is disposed on the first inner side wall 115, and the second outlet 127 is disposed on the second inner side wall 125.

In a central portion 115a of the first inner side wall 115 and a central portion 125a of the second inner side wall 125, the first inner side wall 115 and the second inner side wall 125 are spaced apart from each other by the shortest distance B0. The central portion 115a of the first inner side wall 115 may be a region located between the front end 112 and the rear end 113 of the first inner side wall 115. Similarly, the central portion 125a of the second inner side wall 125 may be a region located between the front end 122 and the rear end 123 of the first inner wall 125.

Each of the first outlet 117 and the second outlet 127 is disposed behind the central portion 115a of the first inner side wall 115 and the central portion 125a of the second inner side wall 125. That is, the first outlet 117 is disposed between the central portion 115a and the rear end 113 of the first inner side wall 115. The second outlet 127 is disposed between the central portion 125a and the rear end 123 of the second inner side wall 125.

A separation distance between the first inner side wall 115 and the second inner side wall 125 increases rearward from the central portion 125a. In addition, the separation distance between the first inner side wall 115 and the second inner side wall 125 increases forward from the central portion 125a.

The separation distance between the front end 112 of the first tower 110 and the front end 122 of the second tower 120 is referred to as a first separation distance B1. The separation distance between the rear end 113 of the first tower 110 and the rear end 123 of the second tower 120 is referred to as a second separation distance B2.

The first separation distance B1 and the second separation distance B2 may be formed longer than the shortest distance B0. The first separation distance B1 and the second separation distance B2 may have the same length or may be formed differently.

The closer the outlets 117 and 127 are to the rear ends 113 and 123, the easier it is to control the air flow through the Coanda effect, which will be described later.

The inner side wall 115 of the first tower 110 and the inner side wall 125 of the second tower 120 may directly provide the Coanda effect, and the outer side wall 114 of the first tower 110 and the outer side wall 124 of the second tower 120 may indirectly provide the Coanda effect.

The inner side walls 115 and 125 directly guide the air discharged from the outlets 117 and 127 to the front ends 112 and 122. That is, the inner side walls 115 and 125 induce the air discharged from the outlets 117 and 127 to directly provide the horizontal air flow.

The indirect air flow is also generated in the outer side walls 114 and 124 due to the air flow in the blowing space 105.

The outer side walls 114 and 124 induce the Coanda effect for the indirect air flow, and guide the indirect air flow to the front ends 112 and 122.

The left side of the blowing space is blocked by the first inner side wall 115, and the right side of the blowing space is blocked by the second inner side wall 125, but the upper side of the blowing space 105 is open.

An air flow converter to be described later may convert a horizontal air flow passing through the blowing space into an upward air flow, and the upward air flow may flow to the opened upper side of the blowing space. The upward air flow may suppress the discharge air from directly flowing to the user and activate convection of the indoor air.

In addition, the width of the discharge air may be adjusted through the flow rate of air joined in the blowing space.

By forming the upper and lower lengths of the first outlet 117 and the second outlet 127 longer than the left and right widths B0, B1, and B2 of the blowing space 105, the discharge air of the first outlet 117 and the discharge air of the second outlet 127 may be induced to be joined in the blowing space 105.

Referring to FIGS. 1 to 3, the case 100 of the blower 1 includes a lower case 150 to which a filter is detachably installed, and a lower case 150 disposed above the lower case 150, and an upper case 140 supported on the lower case 150.

The upper case 140 includes the first tower 110 and the second tower 120.

A tower base 130 connecting the first tower 110 and the second tower 120 is disposed, and the tower base 130 is assembled to the lower case 150. The tower base 130 may be manufactured integrally with the first tower 110 and the second tower 120.

Unlike the present embodiment, the first tower 110 and the second tower 120 may be directly assembled to the lower case 150 without the tower base 130, or may be integrally manufactured with the lower case 150.

The lower case 150 forms the lower portion of the blower 1, and the upper case 140 forms the upper portion of the blower 1.

The blower 1 may suck ambient air from the lower case 150, and discharge the filtered air from the upper case 140. The upper case 140 may discharge air at a position higher than the lower case 150.

The blower 1 may have a pillar shape in which the diameter decreases toward the upper portion. The blower 1 may have a conical or truncated cone shape as a whole.

Unlike the present embodiment, the blower 1 may include all of the two towers arranged therein. In addition, unlike the present embodiment, a cross section does not need to be in a form that becomes narrower toward the upper side.

However, when the cross section becomes narrower toward the upper side as in the present embodiment, there is an advantage in that the center of gravity is lowered and the risk of overturning due to external impact is reduced.

For the convenience of assembly, in the present embodiment, the lower case 150 and the upper case 140 may be separately manufactured. Unlike the present embodiment, the lower case 150 and the upper case 140 may be integrally formed. For example, the lower case and the upper case may be assembled after manufacturing in the form of a front case and a rear case integrally manufactured.

The lower case 150 is formed to gradually decrease in diameter toward the upper end. The upper case 140 is also formed to gradually decrease in diameter toward the upper end.

The outer surfaces of the lower case 150 and the upper case 140 may be formed to be reversed. In particular, the lower end of the tower base 130 and the upper end of the lower case 150 are in close contact, and the outer side surface of the tower base 130 and the outer side surface of the lower case 150 may form a continuous surface.

To this end, the diameter of the lower end of the tower base 130 may be formed to be the same as or slightly smaller than that of the upper end of the lower case 150.

The tower base 130 distributes air supplied from the lower case 150, and provides the distributed air to the first tower 110 and the second tower 120.

The tower base 130 connects the first tower 110 and the second tower 120. The blowing space 105 is disposed above the tower base 130.

In addition, the outlets 117 and 127 are formed above the tower base 130, and the upward air flow and horizontal air flow are formed above the tower base 130.

In order to minimize friction with air, an upper side surface 131 of the tower base 130 may be formed as a curved surface. In particular, the upper side surface is formed as a curved surface depressed downward, and is formed to extend in the front-rear direction. Referring to FIG. 2, one side 131a of the upper side 131 is connected to the first inner side wall 115, and the other side 131b of the upper side 131 is connected to the second inner side wall 125.

When viewed from a top view with reference to FIG. 4, the first tower 110 and the second tower 120 may be symmetrical left and right with respect to a center line L-L'. In particular, the first outlet 117 and the second outlet 127 may be formed to be symmetrical left and right with respect to the center line L-L'.

The center line L-L' is an imaginary line between the first tower 110 and the second tower 120, is formed in the front-rear direction in the present embodiment, and is formed to pass through the upper side surface 131.

Unlike the present embodiment, the first tower 110 and the second tower 120 may be formed in an asymmetrical shape. However, it is more advantageous to control the horizontal air flow and the upward air flow that the first tower 110 and the second tower 120 are symmetrically disposed with respect to the center line L-L'.

Referring to FIGS. 1, 5, or 6, the blower 1 includes a filter 200 that is disposed inside the filter 200 and a fan device 300 that is disposed inside the case 100 and makes air flow to the outlets 117 and 127.

The filter 200 and the fan device 300 are disposed inside the lower case 150. The lower case 150 is formed in a truncated cone shape, and the upper side thereof is opened.

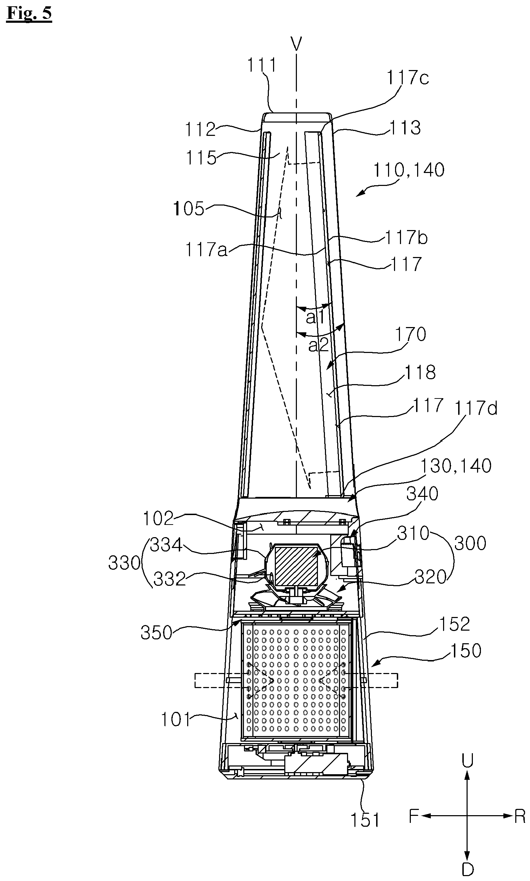

Referring to FIG. 5, the lower case 150 may be formed in a truncated cone shape, and an upper side thereof is opened. The blowing unit 200 including the filter 220 and the fan device 300 includes the lower case 150 that is disposed to surround the filter 220 and the fan device 300, and a plurality of inlets 155 for communicating the inner and outer sides of the lower case 150 are formed along a circumferential direction of the lower case 150.

A base 151 seated on the ground may be disposed below the lower case 150. The base 151 may be formed in a circular shape.

The lower case 150 may be formed in a truncated cone shape with upper and lower sides open. The lower case 150 may be manufactured by being separated into two parts, and the two parts may be assembled to form the truncated cone shape. The lower case 150 may be divided into a first lower case 150a separated to one side of the blower 1 and a second lower case 150b separated into the other side opposite to the one side. When any one or all of the first lower case 150a and the second lower case 150b is separated, the filter 200 disposed inside the lower case 150 may be withdrawn.

In the lower case 150, a plurality of inlets 155 formed long in the up-down direction are radially spaced apart from each other. However, unlike the embodiment, it is also possible that the inlet formed in the form of a plurality of holes in the lower case 150 is formed.

The filter 200 is formed in a cylindrical shape having an up-down direction hollow therein. The outer surface of the filter 200 is disposed to face the inlet 155 formed in the lower case 150.

Indoor air flows through the filter 200 from the outside to the inside, and in this process, foreign substances or harmful gases in the air may be removed.

The fan device 300 is disposed above the filter 200. The fan device 300 may flow the air that has passed through the filter 200 to the first tower 110 and the second tower 120.

Referring to FIG. 5, the fan device 300 includes a fan motor 310 and a fan 320 rotating by the fan motor 310, and is disposed inside the lower case 150.

The fan motor 310 may be disposed above the fan 320, and a motor shaft of the fan motor 310 may be coupled to the fan 320 disposed at the lower side. A motor housing 330 in which the fan motor 310 is installed may be disposed above the fan 320.

The motor housing 330 has a shape that surrounds the entire fan motor 310. Since the motor housing 330 surrounds the entire fan motor 310, it is possible to reduce flow resistance with air flowing from the lower side to the upper side.

Unlike the present embodiment, the motor housing 330 may be formed in a shape that surrounds only the lower portion of the fan motor 310.

The motor housing 330 includes a lower motor housing 332 and an upper motor housing 334. At least one of the lower motor housing 332 and the upper motor housing 334 is coupled to the case 100.

The fan motor 310 may be installed above the lower motor housing 332, and then covered with the upper motor housing 334 to surround the fan motor 310. The motor shaft of the fan motor 310 may pass through the lower motor housing 332 and may be assembled to the fan 320 disposed at the lower side.

The fan 320 may include a hub to which the motor shaft of the fan motor is coupled, a shroud spaced apart from the hub, and a plurality of blades connecting the hub and the shroud.

The air that has passed through the filter 200 is sucked into the shroud, and then flows by being pressurized by the rotating blade. The hub is disposed above the blade, and the shroud is disposed below the blade. The hub may be formed in a downwardly concave bowl shape, and the lower side of the lower motor housing 332 may be partially inserted into the hub.

As the fan 320, a four-flow fan is used. The four-flow fan sucks air in the center of the shaft and discharges air in a radial direction, but the discharged air is inclined with respect to an axial direction.

Since the entire air flow flows from the lower side to the upper side, when air is discharged in a radial direction like a general centrifugal fan, a flow loss due to the change in the flow direction occurs greatly.

The four-flow fan may minimize the flow loss of air by discharging air upward in the radial direction.

Referring to FIG. 5, the diffuser 340 may be disposed above the upper plate 320. The diffuser 340 guides the air flow upward by the fan 320. The diffuser 340 may further reduce the radial component in the air flow and enhance the upward direction air flow component.

The motor housing 330 may be disposed between the diffuser 340 and the fan 320.

In order to minimize the installation height of the motor housing in the up-down direction, the lower end of the motor housing 330 may be inserted into the fan 320. The lower end of the motor housing 330 may be disposed to overlap the fan 320 in the up-down direction. Also, the upper end of the motor housing 330 may be disposed to be inserted into the diffuser 340. The upper end of the motor housing 330 may be disposed to overlap the diffuser 340 in the up-down direction.

The lower end of the motor housing 330 may be disposed higher than the lower end of the fan 320, and the upper end of the motor housing 330 may be disposed lower than the upper end of the diffuser 340.

In order to optimize the installation position of the motor housing 330, the upper side of the motor housing 330 may be disposed inside the tower base 130, and the lower side of the motor housing 330 may be disposed inside the lower case 150. Unlike the present embodiment, the motor housing 330 may be disposed inside the tower base 130 or the lower case 150.

Referring to FIG. 5, a suction grill 350 may be disposed inside the lower case 150. When the filter 200 is separated, the suction grill 350 blocks a user's finger from entering the fan 320 side, thereby protecting the user and the fan 320.

The filter 200 is disposed below the suction grill 350, and the fan 320 is disposed above the suction grill 350. The suction grill 350 is formed with a plurality of through-holes in the up-down direction so that air can flow.

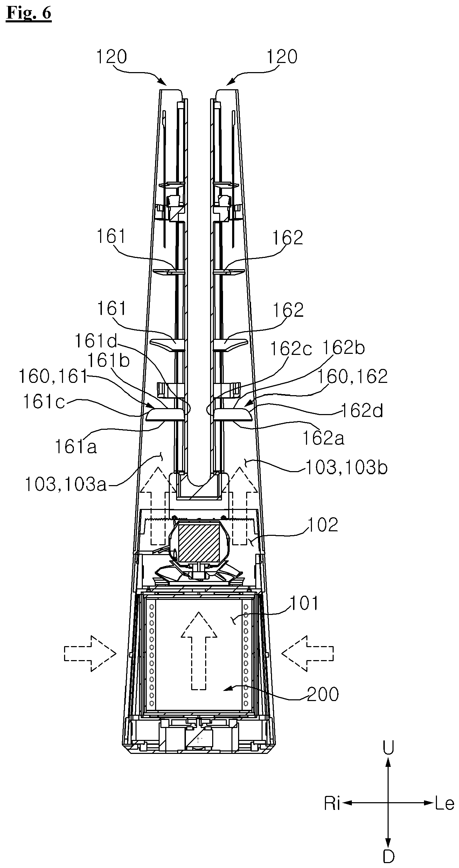

Referring to FIG. 5, a filter installation space 101 in which the filter 200 in the space below the suction grill 350 is disposed is formed inside the case 100. Referring to FIG. 5, a ventilation space 102 through which air flows between the suction grill 350 and the outlets 117 and 127 is formed inside the case 100. Referring to FIG. 6, in the side of the first tower 110 and the second tower 120, an air flow is formed upward, and a discharge space 103 through which air flows through the first outlet 117 or the second outlet 127 is formed. Here, the ventilation space 102 may include the discharge space 103.

The indoor air is introduced into the filter installation space 101 through the inlet 155, and then, is discharged to the outlets 117 and 127 through the ventilation space 102 and the discharge space 103.

Referring to FIGS. 5 to 8, the discharge space 103 is provided with an air guide 160 for switching the flow direction of air to a horizontal direction. A plurality of air guides 160 may be disposed.

The air guide 160 switches the direction of the air flowing from the lower side to the upper side to the horizontal direction. The air guide 160 may guide the air flowing upward in a direction in which the first outlet 117 or the second outlet 127 is formed.

The air guide 160 may include a first air guide 161 disposed inside the first tower 110 and a second air guide 162 disposed inside the second tower 120.

Referring to FIG. 6, when viewed from the front, the first air guide 161 may be coupled to the inner side wall and/or the outer side wall of the first tower 110. The first air guide 161 may have a rear side end 161b close to the first outlet 117 and a front side end 161a spaced apart from the first tower 110.

In order to guide the air flowing downward to the first outlet 117, the first air guide 161 is formed in a convex curved surface from the lower side to the upper side, and the rear side end 161b is disposed higher than the front side end 161a.

Referring to FIG. 6, at least a portion of a left end 161c of the first air guide 161 may be in close contact with or coupled to the left wall of the first tower 110. At least a portion of a right end 161d of the first air guide 161 may be in close contact with or coupled to the right wall of the first tower 110.

Accordingly, the air flowing upward along the discharge space 103 flows from the rear end to the front end of the first air guide 161.

The second air guide 162 is symmetrical left and right with respect to the first air guide 161. Accordingly, the configuration and shape of the second air guide 162 described as the second air guide 162 may also be applied to the first air guide 161.

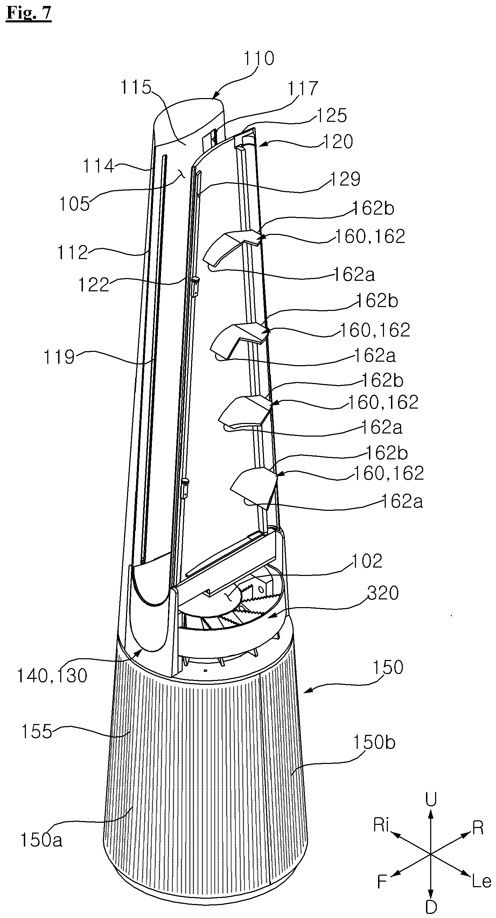

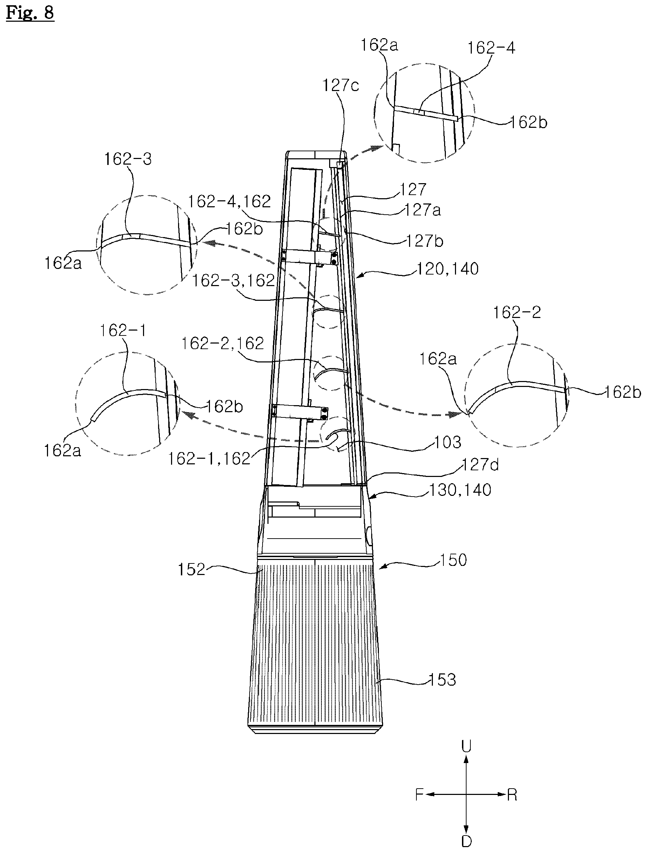

Referring to FIGS. 7 and 8, the second air guide 162 may include a plurality of second air guides 162-1, 162-2, 162-3, and 162-4 in the up-down direction. The second air guide 162 includes a 2-1th air guide 162-1, a 2-2th air guide 162-2, a 2-3th air guide 162-3, and a 2-4th air guide 162-4 that are spaced apart from the lower portion to the upper portion. The plurality of second air guides 162-1, 162-2, 162-3, and 162-4 may be formed so that as they are disposed on the upper side, the ratio of the formed length to the length in the front-rear direction of the inner space of the second tower 120 increases. The plurality of second air guides 162-1, 162-2, 162-3, and 162-4 may have a shape in which the ratio of the curved surfaces formed in the front-rear direction decreases as they are disposed on the upper side.

Referring to FIG. 6, when viewed from the front, the second air guide 162 may be coupled to the inner side wall and/or the outer side wall of the second tower 110. Referring to FIG. 8, the rear side end 162b of the second air guide 162 is close to the second outlet 127, and the front side end 162a is spaced apart from the rear end of the second tower 120.

In order to guide the air flowing downward to the second outlet 127, the second air guide 162 is formed in a convex curved surface from the lower side to the upper side, and the rear side end 162b is disposed higher than the front side end 162a.

Referring to FIG. 6, at least a portion of a left end 162c of the second air guide 162 may be in close contact with or coupled to the left wall of the second tower 120. At least a portion of a right end 162d of the second air guide 162 may be in close contact with or coupled to the right wall of the first tower 110.

Next, referring to FIG. 5 or 8, the first outlet 117 and the second outlet 127 are disposed to extend long in an up-down direction.

The first outlet 117 is formed between the front end 112 and the rear end 113 of the first tower 110. The first outlet 117 is disposed adjacent to the rear end 113 than the front end 112. The air discharged from the first outlet 117 may flow along the first inner side wall 115 by the Coanda effect. The air flowing along the first inner side wall 115 may flow toward the front end 112.

Referring to FIG. 5, the first outlet 117 includes a first border 117a that forms an edge on the air discharge side (front end in the present embodiment), a second border 117b that forms an edge on a side (rear end in the present embodiment) opposite to the air discharge side, an upper border 117c that forms an upper edge of the first outlet 117, and a lower border 117d that forms a lower edge of the first outlet 117.

Referring to FIG. 5, the first border 117a and the second border 117b are disposed parallel to each other. The upper border 117c and the lower border 117d may be disposed parallel to each other.

Referring to FIG. 5, the first border 117a and the second border 117b are disposed to be inclined with respect to a vertical direction V. In addition, the rear end 113 of the first tower 110 is also inclined with respect to the vertical direction V.

An inclination a1 of the outlet 117 may be formed to be larger than an inclination a2 of the outer surface of the tower. Referring to FIG. 5, the inclination a1 of the first border 117a and the second border 117b with respect to the vertical direction V may be formed at 4°, and the inclination a2 of the rear end 113 may be formed at 3°.

The second outlet 127 may be symmetrical left and right with respect to the first outlet 117.

Referring to FIG. 8, the second outlet 127 includes a first border 127a that forms an edge on the air discharge side (front end in the present embodiment), a second border 117b that forms an edge on a side (rear end in the present embodiment) opposite to the air discharge side, an upper border 127c that forms an upper edge of the second outlet 127, and a lower border 117d that forms a lower edge of the second outlet 127.

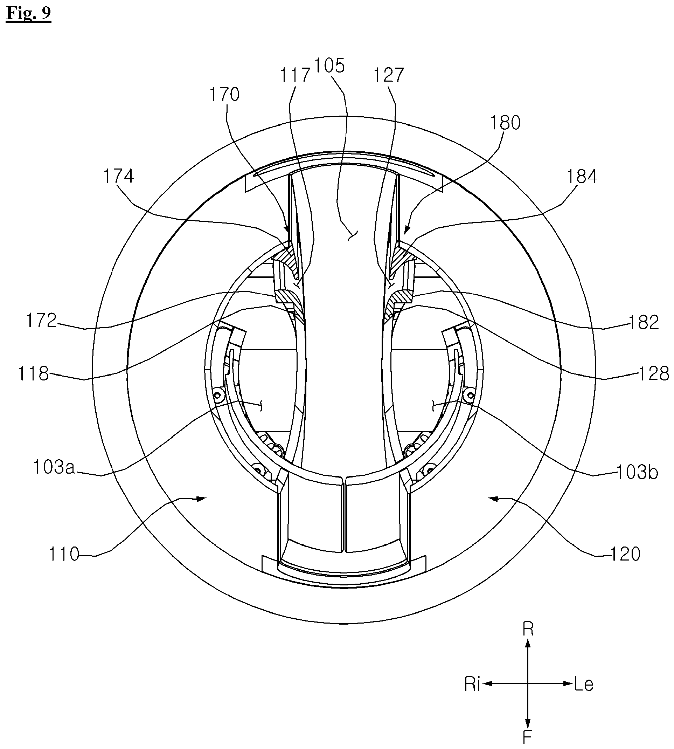

Referring to FIG. 9, the first outlet 117 of the first tower 110 is disposed to face the second tower 120, and the second outlet 127 of the second tower 120 is disposed to face the first tower 110.

The air discharged from the first outlet 117 flows along the inner side wall 115 of the first tower 110 by the Coanda effect. The air discharged from the first outlet 127 flows along the inner side wall 125 of the second tower 120 by the Coanda effect.

The blower 1 further includes a first discharge case 170 and a second discharge case 180.

Referring to FIG. 9, the first outlet 117 is formed in the first discharge case 170. The first discharge case 170 may be assembled to the first tower 110. The second outlet 127 is formed in the second discharge case 180. The second discharge case 180 may be assembled to the second tower 120.

The first discharge case 170 may be installed to penetrate through the inner side wall 115 of the first tower 110. The second discharge case 180 may be installed to penetrate through the inner side wall 125 of the second tower 120.

A first discharge case 170 provided with a first discharge opening 118 is formed in the first tower 110, and a second discharge case 180 provided with a second discharge opening 128 is formed in the second tower 120.

Referring to FIG. 9, the first discharge case 170 includes a first discharge guide 172 that forms the first outlet 117 and is disposed on the air discharge side of the first outlet 117, and a second discharge guide 174 that forms the first outlet 117 and is disposed on the opposite side of the air discharge of the first outlet 117.

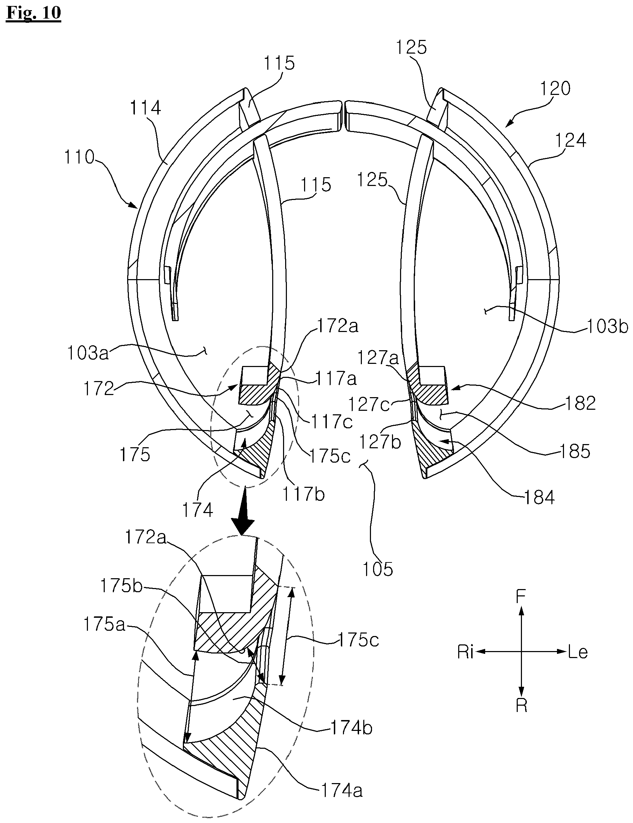

Referring to FIG. 10, outer side surfaces 172a and 174a of the first discharge guide 172 and the second discharge guide 174 provide a portion of the inner side wall 115 of the first tower 110.

The inner side of the first discharge guide 172 is disposed to face the first discharge space 103a, the outer side thereof is disposed to face the blowing space 105. The inner side of the second discharge guide 174 is disposed to face the first discharge space 103a, the outer side thereof is disposed to face the blowing space 105.

The outer side surface 172a of the first discharge guide 172 may be formed in a curved surface. The outer side surface 172a of the first discharge guide 172 may provide a surface continuous with the first inner side wall 115. The outer side surface 172a of the first discharge guide 172 forms a curved surface continuous with the outer side surface of the first inner side wall 115.

The outer side surface 174a of the second discharge guide 174 may provide a surface continuous with the first inner side wall 115. The inner side surface 174b of the second discharge guide 174 may have a curved surface. The inner side surface 174b of the second discharge guide 174 forms a curved surface continuous with the inner side surface of the first outer side wall 115, and thus, the air in the first discharge space 103a may be guided to the first discharge guide 172.

The first outlet 117 may be formed between the first discharge guide 172 and the second discharge guide 174, and the air in the first discharge space 103a may be discharged to the blowing space 105 through the first outlet 117.

The air in the first discharge space 103a is discharged between the outer side surface 172a of the first discharge guide 172 and the inner side surface 174b of the second discharge guide 174. A discharge channel 175 through which air is discharged is formed between the outer side surface 172a of the first discharge guide 172 and the inner side surface 174b of the second discharge guide 174.

The discharge channel 175 has a narrower intermediate portion 175b than an inlet 175a and an outlet 175c. The intermediate portion 175b may be defined as a portion where the second border 117b and the outer side surface 172a of the first discharge guide 172 form the shortest distance.

Referring to FIG. 10, a cross-sectional area from the inlet to the intermediate portion 175b of the discharge channel 175 may be gradually narrowed, and a cross-sectional area from the intermediate portion 175b to the outlet 175c may be wide again. The intermediate portion 175b is located inside the first tower 110. When viewed from the outside, the outlet 175c of the discharge channel 175 may be seen as the outlet 117.

In order to induce the Coanda effect, a radius of curvature of the inner side surface 174b of the second discharge guide 174 may be larger than that of the outer side surface 172a of the first discharge guide 172.

A center of curvature of the outer side surface 172a of the first discharge guide 172 may be located in front of the outer side surface 172a and may be formed inside the first discharge space 103a. The center of curvature of the inner side surface 174b of the second discharge guide 174 is located on the side of the first discharge guide 172 and is formed inside the first discharge space 103a.

Referring to FIG. 10, the second discharge case 180 includes a first discharge guide 182 that forms the second outlet 127 and is disposed on the air discharge side of the second outlet 127, and a second discharge guide 184 that forms the second outlet 127 and is disposed on the opposite side of the air discharge of the second outlet 127.

A discharge channel 185 is formed between the first discharge guide 182 and the second discharge guide 184.

Since the second discharge case 180 is symmetrical to the left and right with respect to the first discharge case 170, a detailed description thereof will be omitted.

Referring to FIG. 4, the air discharged from the first outlet 117 may flow to the first front end 112 along the first inner side surface 115, and the air discharged from the second outlet 127 may flow to the second front end 122 along the second inner side surface 125.

The shortest distance B0 of the first inner side wall 115 and the second inner side wall 125 may be determined to intensively discharge the discharge air forward through the Coanda effect.

As the shortest distance B0 becomes longer, the Coanda effect becomes weaker, but a wide blowing space 105 may be secured, and as the shortest distance B0 decreases, the Coanda effect is strong, but the blowing space 105 becomes narrow.

The shortest distance B0 may be formed in a range of 20mm to 30mm. In this case, it is possible to secure an air flow width (left and right width) of 1.2m at a distance of 1.5m in front of the front ends 112 and 122.

In addition, a discharge angle A of the first inner side wall 115 and the second inner side wall 125 may be designed to limit the spread of the discharge air to the left and right.

Referring to FIG. 4, the first inner side wall 115 forms a convex curved surface from the area where the first outlet 117 is disposed toward the second inner side wall 125 in the area where the first board slit 119 is disposed. In addition, the second inner side wall 125 forms a convex curved surface from the area where the second outlet 127 is disposed toward the first inner side wall 115 in the area where the second board slit 129 is disposed.

Referring to FIG. 4, the discharge angle A may be defined as an angle between the center line L-L' of the first tower 110 and the second tower 120 and a tangent line formed at the front ends 112 and 122 of the inner side walls 115 and 125.

On the other hand, the blower 1 may further include an air flow converter 400 for changing the air flow direction of the blowing space 105.

### <Air Flow Converter>

Hereinafter, an air flow converter 400 capable of forming an upward air flow will be described with reference to FIGS. 9 to 21.

The air flow converter 400 may convert a horizontal air flow flowing through the blowing space 105 into an upward air flow.

The air flow converter 400 includes a first air flow converter 401 disposed in the first tower 110, and a second air flow converter 402 disposed in the second tower 120. The first air flow converter 401 and the second air flow converter 402 are symmetrical, and may have the same configuration.

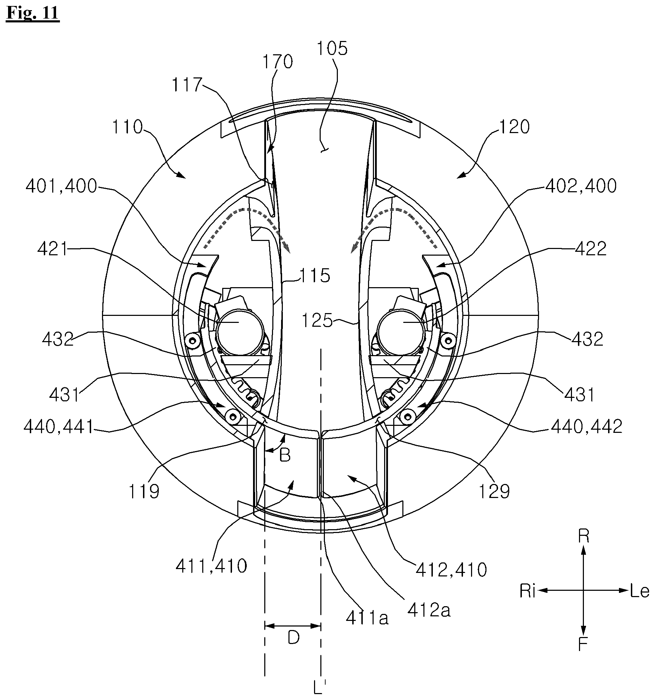

The air flowing through the blowing space 105 flows from the first outlet 117 or the second outlet 127 to the front of the blowing space 105. That is, based on the blowing space 105, the portion where the first outlet 117 and the second outlet 127 are disposed may be set as an upstream of the blowing space 105, and the first guide board 411 and a portion where the first guide board 411 and the second guide board 412 are disposed may be set as a downstream of the blowing space 105. Referring to FIG. 11, the guide board 410 includes a first guide board 411 that is disposed on the first tower 110; and a second guide board 412 that is disposed on the second tower 120.

The first guide board 411 may be disposed inside the first tower 110 and may selectively protrude to the blowing space 105. The second guide board 412 may be disposed inside the second tower 120 and may selectively protrude to the blowing space 105.

A first board slit 119 is formed on the inner side wall 115 of the first tower 110, and a second board slit 129 is formed on the inner side wall 125 of the second tower 120.

The first board slit 119 and the second board slit 129 are symmetrically disposed. The first board slit 119 and the second board slit 129 are formed to extend long in the up-down direction. Referring to FIG. 5, the first board slit 119 and the second board slit 129 may be disposed to be inclined with respect to the vertical direction V.

An inner side end 411a of the first guide board 411 may be exposed to the first board slit 119, and an inner side end 412a of the second guide board 412 may be exposed to the second board slit 129.

When the first guide board 411 is disposed on the inside of the first tower 110, the inner side end 411a of the first guide board 411 may be disposed so as not to protrude from the inner side wall 115. When the second guide board 412 is disposed on the inside of the second tower 120, the inner side end 412a of the second guide board 412 may be disposed so as not to protrude from the inner side wall 115.

Referring to FIG. 5, each of the first board slit 119 and the second boss slit 129 in the vertical direction may be disposed to be more inclined than the front end 112 of the first tower 110 or the front end 122 of the second tower 120.

For example, the front end 112 of the first tower 110 may be formed at an inclination of 3°, and the first board slit 119 may be formed at an inclination of 4°. Similarly, the front end 122 of the second tower 120 may be formed at an inclination of 3□, and the second board slit 129 may be formed at an inclination of 4°.

The first guide board 411 is disposed parallel to the first board slit 119, and the second guide board 412 is disposed parallel to the second board slit 129.

The guide board 410 may be formed in a flat or curved plate shape. The guide board 410 may be formed to extend long in the up-down direction, and may be disposed in front of the blowing space 105.

The guide board 410 may block the horizontal air flow flowing into the blowing space 105 and the direction of the guide board 410 may switch to the upward direction.

Referring to FIG. 11, the inner side end 411a of the first guide board 411 and the inner side end 412a of the second guide board 412 may contact or come close to each other to form the upward air flow. Unlike the present embodiment, one guide board 410 may be in close contact with the opposite tower to form the upward air flow.

As illustrated in FIG. 2A, when the blower 1 forms the horizontal air flow, the inner side end 411a of the first guide board 411 may close the first board slit 119, and the inner side end 412a of the second guide board 412 may close the second board slit 129.

As the first guide board 411 closes the first board slit 119, it is possible to prevent the air in the first discharge space 103a from leaking into the first board slit 119. As the second guide board 412 closes the second board slit 129, it is possible to prevent the air in the second discharge space 103a from leaking into the second board slit 129.

As illustrated in FIG. 2B, when the blower 1 forms the upward air flow, the inner side end 411a of the first guide board 411 may pass through the first board slit 119 and protrude to the blowing space 105, and the inner side end 412a of the second guide board 412 may pass the second board slit 129 and protrude to the blowing space 105.

The first guide board 411 and the second guide board 412 protrude to the blowing space 105 by a rotational operation. Unlike the present embodiment, at least one of the first guide board 411 and the second guide board 412 may linearly move in a slide manner and protrude to the blowing space 105.

Referring to FIG. 11, the first guide board 411 and the second guide board 412 are formed in an arc shape. The first guide board 411 and the second guide board 412 may form a predetermined radius of curvature, and the center of curvature may be located in the blowing space 105.

Hereinafter, a configuration of the air flow converter 400 will be described with reference to the first air flow converter 401 disposed in the first tower 110 with reference to FIGS. 11 to 21. The air flow converter 400 described below may also be applied to the second air flow converter 402. Each configuration of the air flow converter 400 described below may be divided into a "first" configuration disposed in the first tower 110 and a "second" configuration disposed in the second tower 120.

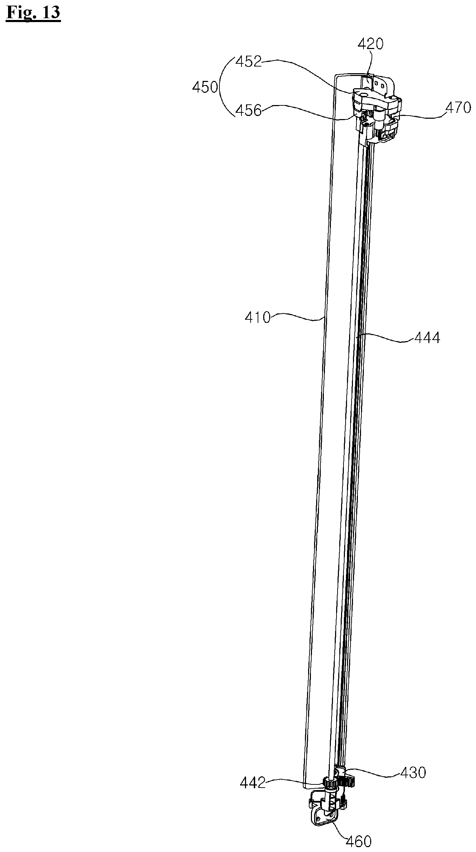

Referring to Figure 13, the air flow converter 400 includes a guide board 410 that is disposed on the tower and protrudes to the blowing space 105, a pair of board guiders 420 and 430 that are mounted on the guide board 410 and change the disposition of the guide board 410, a pair of driving gears 440 and 442 that are rotatably disposed inside the first tower 110 or the second tower 120 and engages with the pair of board guiders 420 and 430, a shaft 444 that connects a pair of driving gears 440 and 442, and a driving motor 470 that is connected to one of the pair of driving gears 440 and 442 to provide a driving force.

Referring to FIG. 13, the air flow converter 400 is fixedly disposed on the inside the first tower 110 or the second tower 120, and includes a pair of supports 450 and 460 that guides the movement of each of the pair of board guiders 420 and 430. The pair of supports 450 and 460 may contact upper and lower ends of the shaft 444, respectively, and support the rotation of the shaft 444. The air flow converter 400 may be connected to the driving motor 470 to rotate, and may include a motor gear 472 that is disposed to engage with one of the pair of driving gears 440 and 442.

The guide board 410 may be hidden inside the tower, or may protrude to the blowing space 105. The guide board 410 may be made of a transparent material.

Referring to FIG. 13, a pair of board guiders 420 and 430 includes an upper guider 420 that is disposed on an upper end portion of the guide board 410 and a lower guider 430 that is disposed on a lower end portion of the guide board 410. The pair of driving gears 440 and 442 includes an upper gear 440 that is disposed to engage with the upper guider 420 and a lower gear 442 that is disposed to engage with the lower guider 430. The pair of supports 450 and 460 includes an upper support 450 that guides the movement of the upper guider 420 and a lower support 460 that guides the movement of the lower guider 430.

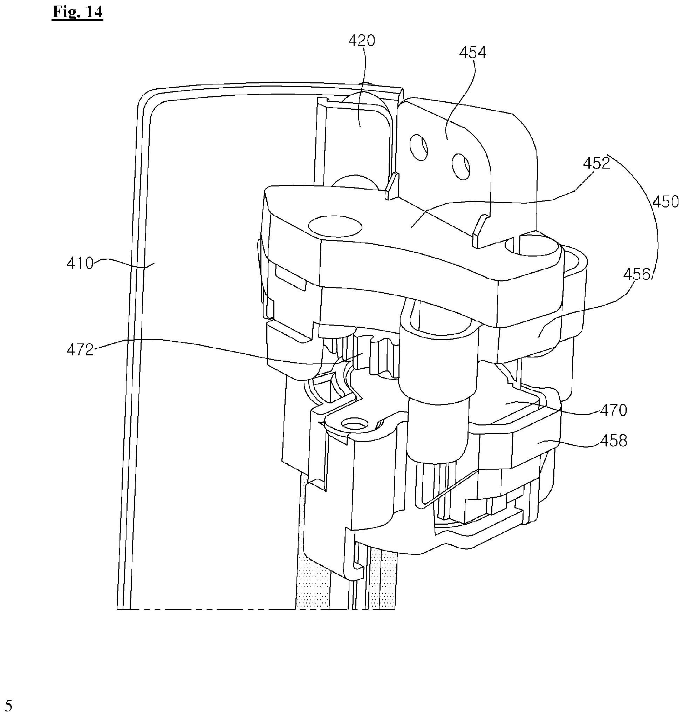

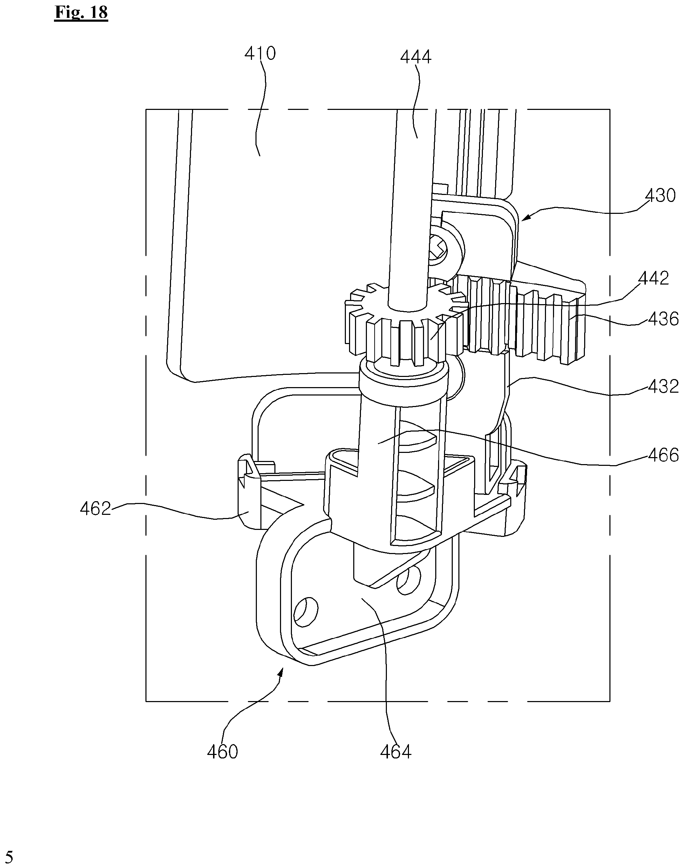

Referring to FIG. 14, the upper guider 420 is connected to the upper support 450, and moves in engage with the upper gear 440. Referring to FIG. 18, the lower guider 430 is connected to the lower support 460, and moves in engage with the lower gear 442.

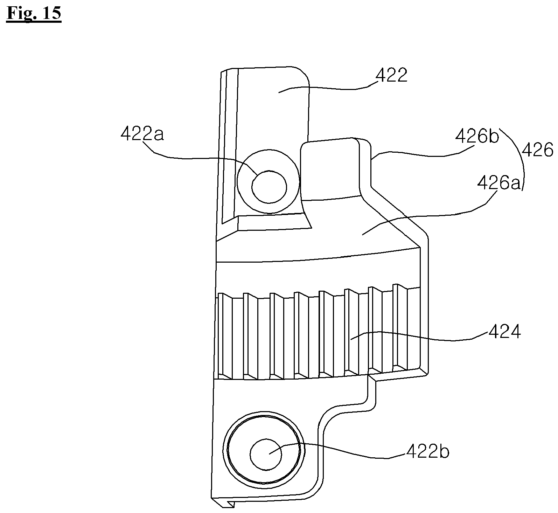

Referring to FIG. 15, the upper guider 420 includes an upper board mounter 422 that fixes the upper guider 420 to one side of the guide board 410, an upper board gear 424 that engages with the upper gear 440 to change the disposition of the upper guider 420, and an upper guide rib 426 that is inserted into an upper guide groove (not illustrated) formed in the upper support 450 to guide the movement of the upper guider 420.

Referring to FIG. 15, the upper board mounter 422 extends upward and downward of the upper board gear 424. In the upper board mounter 422, upper fastening holes 422a and 422b are formed to be connected to the guide board 410. A pair of upper fastening holes 422a and 422b may be spaced apart from each other in an up-down direction. An upper board gear 424 is disposed between the pair of upper fastening holes 422a and 422b. An upper guide rib 426 is disposed between the pair of upper fastening holes 422a and 422b. The upper guider 420 and the guide board 410 may be fastened through the pair of upper fastening holes 422a and 422b. Accordingly, the disposition of the guide board 410 may be changed according to the movement of the upper guider 420. The upper board mounter 422 may be disposed above and below the upper board gear 424.

Referring to FIG. 15, the upper board gear 424 extends downward of the upper board mounter 422, and a gear engaging with the upper gear 440 is disposed on the opposite surface facing the guide board 410. The gear formed on the upper board gear 424 may have a shape of a rack gear. That is, the upper board gear 424 and the upper gear 440 may have a rack and pinion structure. Accordingly, as the upper gear 440 rotates, the upper board gear 424 may move the disposition of the guide board 410.

Referring to FIG. 15, the upper guide rib 426 may be disposed between the upper board mounter 422 and the upper board gear 424. The upper guide rib 426 may have a structure that protrudes from the surface on which the upper board gear 424 is formed. The upper guide rib 426 includes an upper horizontal rib 426a that protrudes in a direction in which the upper support 450 is disposed between the upper board gear 424 and the upper board mounter 422, and an upper vertical rib 426b that protrudes upward from the end portion of the upper horizontal rib 426a. The upper vertical rib 426b may be disposed to be inserted into the upper guide groove (not illustrated) of the upper supporter 450.

When viewed from the upper side, the upper vertical rib 426b may have a curved shape having the same center of curvature as the center of curvature of the guide board 410.

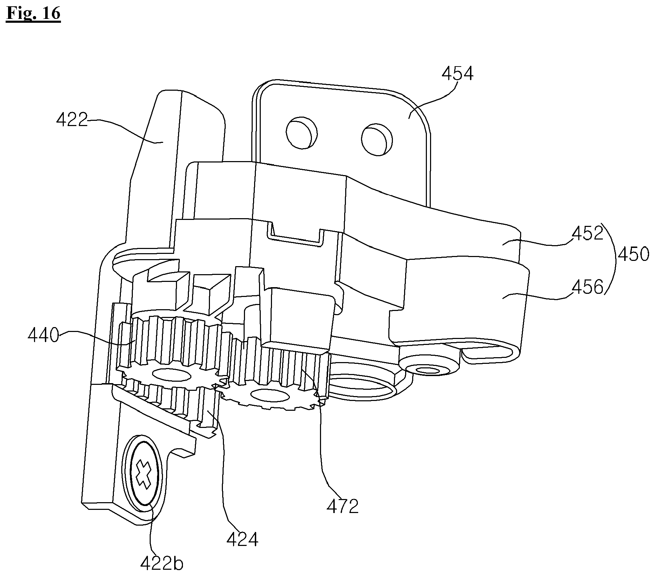

The upper support 450 is provided with an upper guide groove formed to guide the movement of the upper guide rib 426. The upper support 450 is fixedly disposed on the inside of the first tower 110 or the second tower 120. Referring to FIG. 16, the upper support 450 may include an upper case mounter 454 fixed on the inside of the first tower 110 or the second tower 120.

Referring to FIG. 16, the upper support 450 includes an upper fixing body 452 that is mounted on the inside of the first tower 110 or the second tower 120, and an upper fastening body 456 that is coupled to the upper fixing body 452 and is mounted with a driving motor 470.

The upper fixing body 452 and the upper fastening body 456 are coupled to each other. The upper fixing body 452 is disposed above the upper fastening body 456. The upper fastening body 456 includes an upper support plate 457 that supports the upper horizontal rib 426a of the upper guider 420, and the upper fixing body 452 is provided with an upper guide groove that guides the movement of the upper vertical rib 426b. The upper guide groove may limit the movement range of the upper vertical rib 426b.

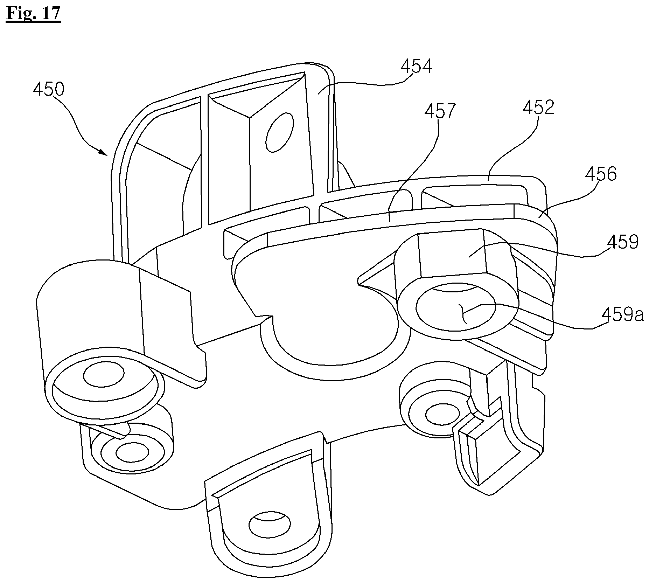

Referring to FIG. 16, the driving motor 470 is mounted on the lower side of the upper fastening body 456. The driving motor 470 is fixedly disposed on the lower side of the upper fastening body 456. Referring to FIGS. 16 and 17, the lower surface of the upper fastening body 456 has a motor mounting part 458 to which the driving motor 470 is fixed, and an upper shaft mounting part 459 into which one end of the shaft 444 is inserted. The upper shaft mounting part 459 may have an upper end of the shaft 444 inserted thereinto, and may be provided with a rotatable upper shaft groove 459a.

An upper gear 440 is disposed on the upper end portion of the shaft 444. The upper gear 440 is fixedly disposed to the shaft 444. Accordingly, when the upper gear 440 rotates, the shaft 444 may also rotate.

Referring to FIG. 14, the shaft 444 may be disposed to be inclined at a set angle e based on an imaginary axis Z formed perpendicular to the ground. The shaft 444 may be inclinedly disposed to correspond to the direction in which the first board slit 119 or the second board slit 129 formed on each of the first inner side wall 115 or the second inner side wall 125 is formed.

The upper gear 440 is disposed to engage with the motor gear 472 connected to the driving motor 470. In addition, when the upper gear 440 is rotated in engage with the motor gear 472 on one side, the upper gear 440 may change the disposition of the upper board gear 424 by engaging with the upper board gear 424 of the upper guider 420 on the other side. Also, when the upper gear 440 rotates in engage with the motor gear 472, the shaft 444 may rotate to rotate the lower gear 442 disposed on the lower end portion of the shaft 444.

Referring to FIG. 18, the lower guider 430 is connected to the lower support 460, and moves in engagement with the lower gear 442. The lower guider 430 is connected to the lower support 460 and moves in engage with the lower gear 442.

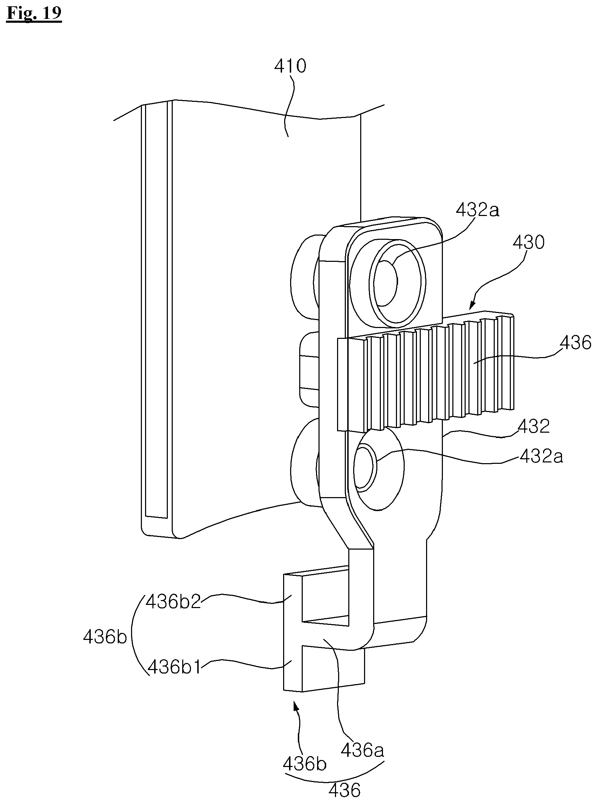

Referring to FIG. 19, the lower guider 430 includes a lower board mounter 432 that fixes the lower guider 432 to one side of the guide board 410, a lower board gear 434 that engages with the lower gear 442 to change the disposition of the lower guider 430, and a lower guide rib 436 that is inserted into a lower guide groove 462a formed in the lower support 460 to guide the movement of the upper guider 430.

Referring to FIG. 19, the lower board mounter 432 extends in the up-down direction of the lower board gear 434. The lower board mounter 432 is provided with a plurality of lower fastening holes 432a to be connected to the guide board 410. A plurality of lower fastening holes 432a may be disposed in an up-down direction with respect to the lower board gear 434. The lower guider 430 and the guide board 410 may be fastened through at least one of the plurality of lower fastening holes 432a. Accordingly, the disposition of the guide board 410 may be changed according to the movement of the lower guider 430. The lower board mounter 432 may be disposed above and below the lower board gear 434.

Referring to FIG. 19, the lower board gear 434 may be disposed between the plurality of lower fastening holes 432a formed in the lower board mounter 432 in the up-down direction. In the lower board gear 434, a rack gear engaging with the lower gear 442 is disposed on the opposite surface facing the guide board 410. The lower board gear 434 and the lower gear 442 may have a rack and pinion structure. Accordingly, as the lower gear 442 rotates, the lower board gear 434 may move in the direction in which the lower board gear 434 is formed.

The lower guide rib 436 may extend from the lower end portion of the lower board mounter 432. The lower guide rib 436 may have a structure extending to a surface opposite to the surface on which the lower board gear 434 is formed. That is, the upper guide rib 426 and the lower guide rib 436 have a structure in which they protrude in opposite directions.

The lower guide rib 436 includes a lower horizontal rib 436a that protrudes from the lower end portion of the lower board mounter 432 in the direction in which the lower support 460 is disposed, and a lower vertical rib 436b that protrudes in the up-down direction from the end portion of the lower horizontal rib 436a. The lower horizontal rib 436a protrudes in the direction of the guide board 410.

The lower vertical rib 426b may be disposed to be inserted into the lower guide groove 462a of the lower supporter 460. The lower vertical rib 436b includes an upper rib 436b2 that extends upward from the end portion of the lower horizontal rib 436a and a lower rib 436b1 that extends downward from the end portion of the lower horizontal rib 436a.

When viewed from the upper side, the lower vertical rib 436b may have a curved shape having the same center of curvature as the center of curvature of the guide board 410.

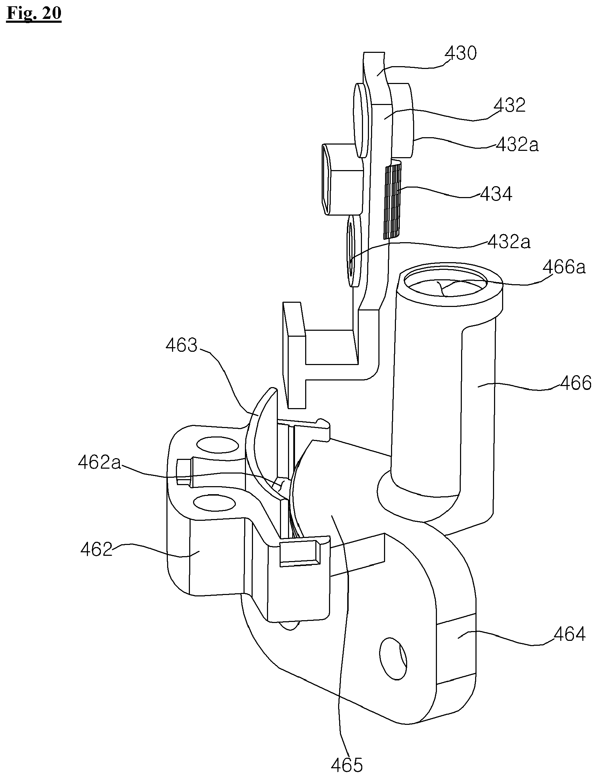

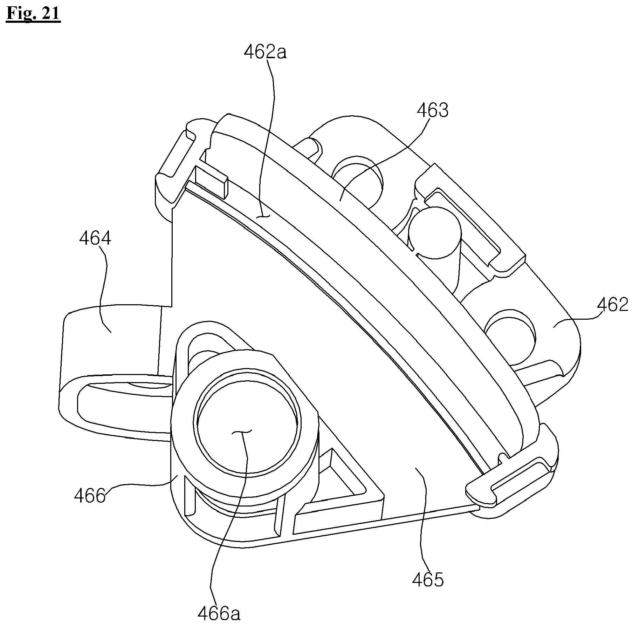

Referring to FIGS. 20 and 21, the lower support 460 is provided with a lower guide groove 462a formed to guide the movement of the lower guide rib 436. The lower guide groove 462a may include the lower guide groove 462a into which the lower rib 436b1 is inserted, and an additional guide groove (not illustrated) into which the upper rib 436b2 is inserted.

The lower support 460 is fixedly disposed on the inside of the first tower 110 or the second tower 120. The lower support 460 may include a lower case mounter 464 fixed to the inside of the first tower 110 or the second tower 120.

The lower support 460 may include a lower fixing body 462 mounted on the inside of the first tower 110 or the second tower 120.

The lower fixing body 462 includes a lower support plate 465 that supports the lower horizontal rib 436a of the upper guider 420. The lower fixing body 462 is provided with the lower guide groove 462a formed to guide the movement of the lower guide rib 434. The lower fixing body 462 includes a guide wall 463 that prevents the lower guide rib 436 from moving in a direction perpendicular to the moving direction of the lower guider 430. The guide wall 463 is disposed in an opposite direction of a lower shaft mounting portion 466 with respect to the lower guide groove 462a. The guide wall 463 has a structure in which the upper rib 436b2 protrudes upward to correspond to the protruding height thereof. Accordingly, when the lower guide rib 434 is inserted into the lower guide groove 462a, the lower rib 436b1 is disposed in the lower guide groove 462a, and the upper rib 436b2 may be disposed to face the guide wall 463.

The upper guide rib 426 and the lower guide rib 436 may extend in different directions.

Referring to FIG. 15, the upper horizontal rib 426a of the upper guide rib 426 extends in a direction away from the guide board 410, and referring to FIG. 19, the lower horizontal rib 436a of the lower guide rib 436 extends in the direction of the guide board 410.

In addition, referring to FIG. 15, the upper vertical rib 426b of the upper guide rib 426 extends upward, and referring to FIG. 19, the lower vertical rib 436b of the lower guide rib 436 extends downward. Specifically, the lower rib 436b1 of the lower vertical rib 436b extends downward. Accordingly, the upper guide groove is formed upward, and the lower guide groove 462a is formed downward.

The lower guide groove 462a may limit the movement range of the lower vertical rib 436b. The lower fixing body 462 is provided with the lower shaft mounting portion 466 into which the other end of the shaft 444 is inserted. The lower shaft mounting portion 466 is provided with a lower shaft groove 466a into which the lower end of the shaft 444 is inserted and rotate.

Although the preferred embodiments of the present disclosure have been illustrated and described above, the present disclosure is not limited to the specific embodiments described above, and can be variously modified by those skilled in the art to which the present disclosure pertains without departing from the gist of the present disclosure claimed in the claims, and these modifications should not be understood individually from the technical ideas or prospects of the present disclosure.

## Claims

1. A blower (1), comprising:
a lower case (150) that has an inlet (155) provided therearound and has an opened upper side;
a first tower (110) that extends upward from the lower case (150) and has a first outlet (117) opened forward on a first wall (115);
a second tower (120) that extends upward from the lower case (150), is spaced apart from the first wall (115), and has a second outlet (127) opened forward on a second wall (125) facing the first wall (115);
a fan (300) that is disposed in the lower case (150) and makes air introduced from the inlet (155) to flow to an upper side in which the first tower (110) and the second tower (120) are disposed;
a first air flow converter (401) that is disposed in front of the first outlet (117), disposed inside the first tower (110), or protrudes from the first wall (115) in a direction in which the second tower (120) is disposed; and
a second air flow converter (402) that is disposed in front of the second outlet (127), disposed inside the second tower (120), or protrudes from the second wall (125) in a direction in which the first tower (110) is disposed,
wherein each of the first air flow converter (401) and the second air flow converter (402) includes:
a guide board (410, 411, 412) that is disposed inside the first tower (110) or the second tower (120) or protrudes through the first wall (115) or the second wall (125);
an upper gear (440) that is configured to rotate in engagement with an upper portion of the guide board (410, 411, 412);
a lower gear (442) that is configured to rotate in engagement with a lower portion of the guide board (410, 411, 412);
a shaft (444) that is connected to each of the upper gear (440) and the lower gear (442) to rotate together; and
a motor (470) that is connected to one of the upper gear (440) and the lower gear (442) to provide a driving force.

2. The blower of claim 1, wherein the first and/or second air flow converter (401, 402) includes:
an upper guider (420) that is fixedly disposed above the guide board (410, 411, 412) and engages with the upper gear (440) to move the disposition of the guide board (410, 411, 412); and
a lower guider (430) that is fixedly disposed below the guide board (410, 411, 412) and engages with the lower gear (442) to move the disposition of the guide board (410, 411, 412).

3. The blower of claim 2, wherein the first and/or second air flow converter (401, 402) includes:
an upper support (450) that is fixedly disposed inside the first tower (110) or the second tower (120) and limits a movement range of the upper guider (420); and
a lower support (460) that is fixedly disposed inside the first tower (110) or the second tower (120) and limits a movement range of the lower guider (430).

4. The blower of claim 3, wherein an upper shaft groove (459a) into which an upper end of the shaft (444) is inserted is formed in the upper support (450);
a lower shaft groove (466a) into which a lower end of the shaft (444) is inserted is formed in the lower support (460); and
the shaft (444) is rotatably disposed in each of the upper shaft groove (459a) and the lower shaft groove (466a).

5. The blower of claim 4, wherein the upper guider (420) includes an upper board mounter (422) that is fixed to one side of the guide board (410, 411, 412), an upper board gear (424) that engages with the upper gear (440) to change the disposition of the upper guider (420), and an upper guide rib (426) that is connected to the upper support (450) to guide the movement of the upper guider (420), and
an upper guide groove limiting the movement range of the upper guide rib (426) is formed in the upper support (450).

6. The blower of claim 5, wherein a pair of the upper board mounters (422) is spaced apart in the vertical direction, and
the upper gear (440) is disposed between the pair of upper board mounters (422) spaced apart in an up-down direction.

7. The blower of claim 5 or 6, wherein the upper support (450) includes an upper fixing body (452) that is mounted inside the first tower (110) or the second tower (120), and an upper fastening body (456) that is coupled to the upper fixing body (452) and mounted with the motor (470), and
the upper guide groove for guiding the movement of the upper guide rib (426) is formed in the upper fixing body (452).

8. The blower of any one of claims 5 to 7, wherein the lower guider (430) includes a lower board mounter (432) that is fixed to the guide board (410, 411, 412) at a position spaced downward from the upper guider (420), a lower board gear (434) that engages with the lower gear (442) to change the disposition of the lower guider (430), and a lower guide rib (436) that is connected to the lower support (460) to guide the movement of the lower guider (430), and
a lower guide groove (462a) for limiting the movement range of the lower guide rib (436) is formed in the lower support (460).

9. The blower of claim 8, wherein the upper guide rib (426) and the lower guide rib (436) extend in different directions, and
each of the upper guide groove and the lower guide groove (462a) forms a groove in a direction in which the upper guide rib (426) and the lower guide rib (436) extend.

10. The blower of claim 8 or 9, wherein the upper guide rib (426) includes an upper horizontal rib (426a) that protrudes from one side of the upper board mounter (422) in a direction in which the upper support (450) is disposed, and an upper vertical rib (426b) that protrudes upward from an end portion of the upper horizontal rib (426a),
the lower guide rib (436) includes a lower horizontal rib (436a) that protrudes from a lower end portion of the lower board mounter (432) in a direction in which the lower support (460) is disposed, and a lower vertical rib (436b) that protrudes from the end portion of the lower horizontal rib (436a) in the up-down direction, and
the upper horizontal rib (426a) extends in a direction away from the guide board (410, 411, 412), and the lower horizontal rib (436a) extends in a direction closer to the guide board (410, 411, 412).

11. The blower of claim 10, wherein the lower support (460) includes a lower fixing body (462) mounted on the inside of the first tower (110) or the second tower (120), and
the lower fixing body (462) includes a lower support plate (465) that supports the lower horizontal rib (436a).

12. The blower of claim 11, wherein the lower fixing body (462) includes a guide wall (463) that prevents the lower guide rib (436) from moving in a direction perpendicular to a moving direction.

13. The blower of any one of claims 1 to 12, wherein a first board slit (119) through which the guide board (411) of the first air flow converter (401) passes is formed on the first wall (1159 of the first tower (110),
a second board slit (129) through which the guide board (412) of the second air flow converter (402) passes is formed on the second wall (125) of the second tower (120),
when the guide board (411) of the first air flow converter (401) is disposed inside the first tower (110), the end portion of the guide board (4119 of the first air flow converter (401) is disposed in the first board slit (119), and
when the guide board (412) of the second air flow converter (402) is disposed inside the second tower (120), the end portion of the guide board (412) of the second air flow converter (402) is disposed in the second board slit (129).

14. The blower of any one of claims 1 to 12, wherein a first board slit (119) through which the guide board (411) of the first air flow converter (401) passes forward of the first outlet (117) is disposed on the first wall (115),
a second board slit (129) through which the guide board (412) of the second air flow converter (402) passes forward of the second outlet (127) is disposed on the second wall (125), and
when the guide board (411, 412) of each of the first air flow converter (401) and the second air flow converter (402) protrudes from the first tower (110) or the second tower (120), a wind direction of air flowing forward through the first outlet (117) or the second outlet (127) is changed.
